Europäisches Patentamt

European Patent Office

Office européen des brevets

(19)

(11) Publication number: **0 122 652**
**A2**

(12) **EUROPEAN PATENT APPLICATION**

(21) Application number: **84200395.6**

(22) Date of filing: **20.03.84**

(51) Int. Cl.³: **B 65 D 90/08**

(30) Priority: **15.04.83 BE 210567**

(43) Date of publication of application:
**24.10.84 Bulletin 84/43**

(84) Designated Contracting States:
**AT CH DE FR GB IT LI LU NL SE**

(71) Applicant: **Atelier Janssen Naamloze Vennootschap**
**Kettingbrugweg 36**
**B-3599 Bocholt-Kaulille(BE)**

(72) Inventor: **Janssen, Jaak**
**Molendijk 40**
**B-3581 Achel(BE)**

(74) Representative: **Pieraerts, Jacques et al,**
**Bureau Gevers S.A. rue de Livourne 7, Bte. 1**
**B-1050 Bruxelles(BE)**

(54) Container or box pallet to be mounted on a movable frame.

(57) There is described a container or box pallet mainly intended to be mounted on a movable frame, which is formed by components to be shipped as "building kit", comprised of at least one floor plate (2), two side panels (5), and a front plate (12), means to connect together said components, whereby one side wall (5) may be part of said floor plate (2) and the front plate (12) may be comprised of two parts, and each part may form a single unit with a side wall.

FIG. 1

Croydon Printing Company Ltd.

EP 0 122 652 A2

"Container or box pallet to be mounted on a movable frame".

This invention relates to a container or box pallet to be mounted on a movable frame, which may be shipped to destination under more economical conditions. The object of the invention is thus not the designing of a removable unit, but rather the providing of a container or box pallet which may be shipped with a reduced volume. After assembling on location the components of the container or box pallet, it is not intended to ever take same apart again. It is actually one object of the invention to so design and manufacture the components that once they have been connected together, said components may be joined by a welding seam, for example, into a final and strong unit.

To obtain such a result according to the invention, the container or box pallet is formed according to the invention by components to be shipped as a "building kit", comprised of at least one floor plate, two side panels and one front plate, means to connect together said components whereby one side wall may be part of said floor plate and the front plate may be comprised of two parts and each part forms an unit with a side wall.

In a first possible embodiment, said means are formed by bolts and nuts which go through openings which are provided in those edges connecting together of said components.

According to another embodiment, said means are formed by hinges which connect together said components.

In a preferred embodiment, said floor plate and side panels have a rim which is bent vertically downwards in use position, in which rims said openings are provided.

Other details and features of the invention will stand out from the following description, given by way of non limitative example and with reference to the accompanying drawings, in which :

Figure 1 is a perspective showing with exploded parts of a container or box pallet according to the invention.

Figure 2 also shows in a perspective view, part of the disassembled components.

Figures 3, 4, 5, and 6 diagrammatically show in cross-section, possible connections between the floor plate and a side panel from the container or box pallet.

Figure 7 diagrammatically shows in a top view, a possible connection between two side walls and a front wall provided as two indentical parts.

Figure 8 diagrammatically shows in cross-section a possible fixed connection between the floor plate and one side wall.

Figure 9 diagrammatically shows in cross-section a possible connection between a roof and the side panels from a container or box pallet according to the invention.

Figure 10 diagrammatically shows in cross-section an ambodiment of a box pallet or container which is more particularly intended for the pressing together of materials inside said container.

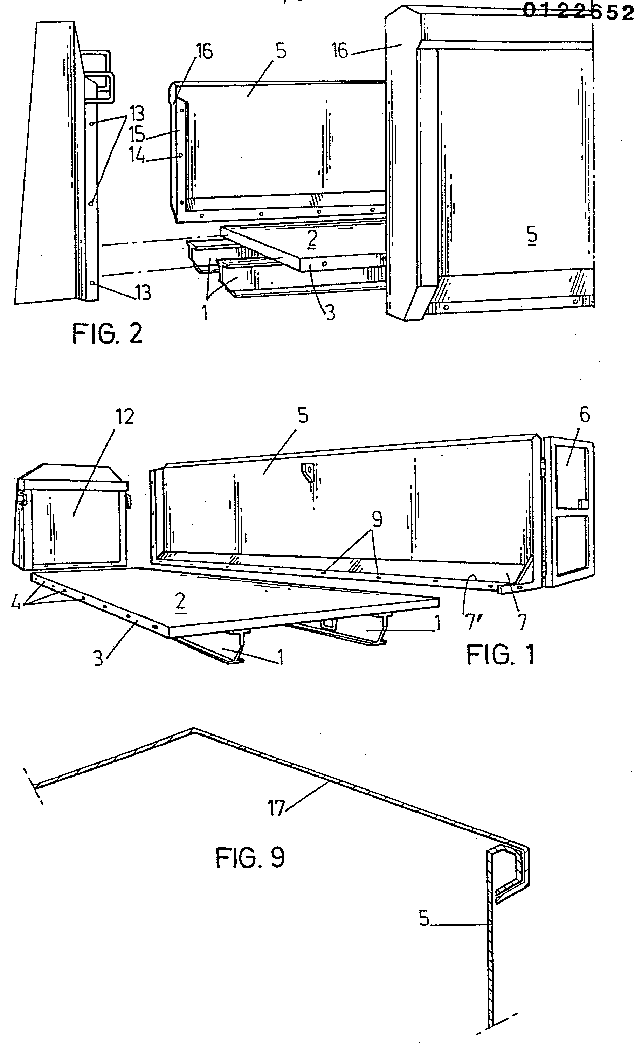

The container or box pallet according to the invention, in the embodiment as shown in figures 1, 2, 3 and 5, comprises a floor plate 2 secured or still to be secured to two longitudinal runners 1. Said floor plate 2 is for example comprised of a 3 mm-thick metal plate, which is reinforced locally with cross-beams 2'.

Along the lengthwise direction thereof, the floor plate 2 is provided with overturned edges 3.

The edges 3 are turned over 90° relative to the plane of said floor plate 2, in such a way that said edges or rims lie vertically in the use condition of the container. In said rims 3 are provided openings 4 through which pass bolts which are to connect said floor plate to the side panels still to be described. Both side panels 5, each one fitted with a hinged door for example, have in the use position, a vertical wall which is directed at an angle inwards at the bottom. Said slanting part 7 which is extended with a horizontal portion 7', merges in the use position into a vertical edge or rim 8 with openings 9 the pitch of which corresponds to the pitch of the openings 4 in the rims 3 of the floor plate 2.

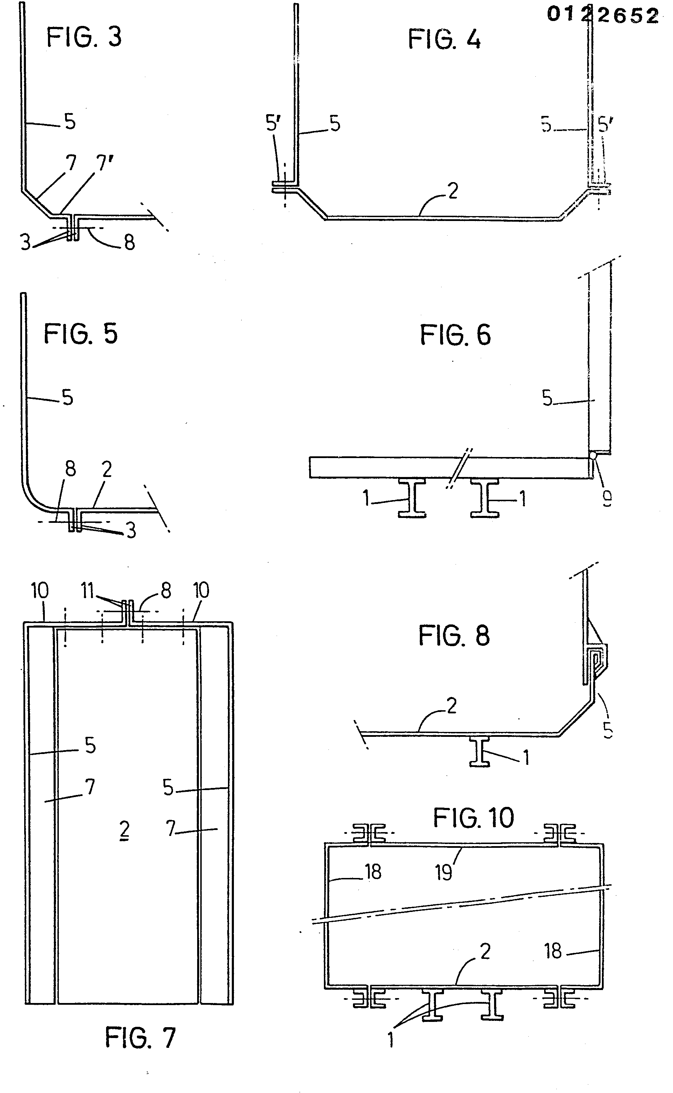

As shown in figure 5, the side walls 5 run at the bottom arc-like in the direction of the floor plate 2.

In figure 4 is shown a variation wherein the floor plate 2 is directed sidewise at an angle upwards with lengthwise edges 2' which are connected to the side panels 5 due to both the edges of the floor plate 2 and the overturned edges of the side panels 5 engaging one another. In figure 4, the overturned edge of one side panel 5 bears the reference numeral 5' and the overturned edge cooperating therewith, of the slanting portion 2' from the floor plate 2, bears the reference numeral 2". In the various figures, the connection between said components bears the general reference 8.

In figure 6 is diagrammatically shown another variation wherein the floor plate 2 is connected to a side panel 5 by means of a hinge connection 9.

Figure 7 finally pertains to an embodiment wherein two side panels 5 each form an unit with half a front wall 10. Each half front wall 10 then forms an unit with a side panel 5. The connection between both half front panels 10 is obtained due to each half panel having a square-turned rim 11, which rims are joined together by a nut-bolt connection 8. Said structures are well suited for shipping in a compact form as a "building kit", as mentioned in the preamble.

Another embodiment is shown in figure 8. In such embodiment, the floor plate 2 forms a single unit with one side wall 5. Such structure is also well suited to shipping under a reduced volume.

When the container or box pallet is present in the form as shown in figures 1, 2, 3 and possibly 4, a front wall 12 is simply connected to the longitudinal runners 1 underneath the floor plate 2 and to the head edges of the side panels 5 by using the above-mentioned nut-and-bolt connection.

For this purpose the front panel 12 is provided sidewise with a series openings 13 which correspond to the openings 14 which are provided in front in an overturned rim 15 of the reinforcement elements 16 which are made fast to the side walls on those ends thereof which lie on the front side of the container or box pallet. Moreover the front panel comprises fastening means secured to the under side thereof, which make it possible to connect the front panel to the longitudinal runners.

A container or box pallet may further have on the top side of the side walls 5, a removable connection with a roof structure 17 which may be fitted or not with hinging or sliding access hatches.

Finally the embodiment as shown in figure 10 pertains to a special case wherein a container or box pallet is mostly provided for the pressing together in such a volume of materials or waste. Such a container is assembled from a floor plate 2, with longitudinal runners 1, two side panels 18, a roof plate 19, a front wall and a back door. The connection between said elements 2, 18,19 occurs by joining together with nut-and-bolt connections the overturned lengthwise edges of said elements. Such an embodiment is also very well suited to forming a building kit with a substantially-reduced volume.

In every location where a lengthwise or cross-wise connection has occured by applying the system according to the invention, the elements may be joined with a weld seam into a stable unit.

It must be understood that the invention is in no way limited to the above embodiments and that many changes may be brought therein without departing from the scope of the invention as defined by the appended claims.

CLAIMS.

1. Container or box pallet mainly intended to be mounted on a movable frame, which is formed by components to be shipped as "building kit", comprised of at least one floor plate (2), two side panels (5) and one front plate (12), means to connect together said components, whereby one side wall may be part of said floor plate and the floor plate may be comprised of two parts and each part forms an unit with a side wall.

2. Container or box pallet as defined in claim 1, in which said means are formed by bolts which pass through openings (4-9) which are provided in these edges connecting together of said components.

3. Container or box pallet as defined in claim 1, in which said means are formed by hinges (9) which connect said components together.

4. Container or box pallet as defined in any one of claims 1-3, in which said floor plate (2) and side panels (5) have a rim (3-8)which is bent vertically downwards in use position, in which rims are provided said openings.

5. Container or box pallet as defined in claim 4, in which said side panels (5) in use position, have a part (7) lying at an angle inwards at the bottom, whereby a horizontal strip (7') connects thereto before merging into said rim (8).

6. Container or box pallet as defined in claim 4, in which said side panels (5) in the use position, merge at the bottom into an arc-like wall at the ends of which lie said rims (8).

7. Container or box pallet as defined in any one of claims 1-6, in which when said side panels (5) have to be connected along the head side thereof, that is the side with said front plate (12) in the use position, vertical reinforcement elements (16) are present thereon which are connected by bolts and nuts to said front plate (12).

8. Container or box pallet as defined in claim 1, in which the lengthwise edges of said floor plate (2) in use position, are bent upwards, possibly overturned, whereby the connection with said side panels (5) occurs some distance above the floor plate.

9. Container or box pallet as defined in any one of claims 1-8, in which the lengthwise edges of said panels (5) are provided at the top with means for the fastening of a removable roof (17).

10. Container or box pallet, which is formed by a floor plate (2) with side panels (18) and a roof plate (19) the lengthwise edges of which are connected to the top edges of said side panels, preferably after overturning thereof in the direction of the floor.

11. Container or box pallet as defined in claim 10, in which said roof plate (19) may be fitted with hinging or sliding access hatches.

FIG. 2

FIG. 1

FIG. 9

0122652

1/2

0122652

FIG. 3

FIG. 4

FIG. 5

FIG. 6

FIG. 7

FIG. 8

FIG. 10